# EUROPEAN PATENT SPECIFICATION

(11) **EP 2 558 338 B1**
(45) Date of publication and mention of the grant of the patent: **29.06.2016**
(21) Application number: 11723753.7
(22) Date of filing: 12.04.2011
(51) Int. Cl.: B60T 8/32, B60T 13/68

(54) **TRACTOR-TRAILER BRAKING SYSTEM**
BREMSSYSTEM FÜR DEN ANHÄNGER EINES TRAKTORS
SYSTÈME DE FREINAGE TRACTEUR - REMORQUE

(30) Priority: 14.04.2010 PL 39098010
(43) Date of publication of application: 20.02.2013
(73) Proprietor: PRZEMYSLOWY INSTYTUT MASZYN ROLNICZYCH, 60-963 Poznan (PL)
(72) Inventor: DUBOWSKI, Adam, PL-60-681 Poznan (PL); GRZELAK, Janusz, PL-62-060 Steszew (PL); PAWLOWSKI, Tadeusz, PL-60-277 Poznan (PL); RAKOWICZ, Aleksander, PL-61-657 Poznan (PL)
(74) Representative: Kowalkiewicz, Wladyslaw
(86) International application number: PCT/PL2011/000036
(87) International publication number: WO 2011/129711

(56) References cited:
- EP-A1- 0 478 952
- EP-A2- 2 067 675
- DE-A1- 10 143 888
- DE-A1- 19 701 070
- DE-A1- 19 855 217
- US-A- 5 456 526
- US-A1- 2002 180 257

## Description

The subject of the invention is a tractor-trailer braking system, especially of the automotive of light and medium size of the trailers.

The publication of US Patent Application No.US 2002/0180257 A1 entitled "Electro-hydraulic brake actuating device for a trailer" presents a trailer brake system for a trailer being towed by a tow vehicle having a brake system. The trailer brake system comprising, in combination: a control sensor adapted to provide a signal when the braking system of the tow vehicle is actuated; at least one brake actuated by pressurized brake fluid; a brake fluid reservoir; a brake fluid pump connected to the brake fluid reservoir; a first valve connected to the brake fluid pump and directly connected to the at least one brake; a second valve connecting the at least one brake and the brake fluid reservoir; a controller in communication with the control sensor, the first valve, and the second valve and adapted to open the first valve, to increase braking force applied to the at least one brake and open the second valve to decrease braking force to the at least one brake; and a feedback sensor in communication with the controller and capable of generating a signal that represents braking force applied to the at least one brake.
The publication of Germany Patent Application No. DE 19701070 A1 presents a hydraulic vehicle brake system with an external power service brake system and a muscle power auxiliary brake system, comprising a master cylinder that is connected to at least one wheel brake cylinder through a block valve, a brake fluid reservoir placed on said master cylinder and which communicates with the master cylinder, a hydraulic pump including a pressure side which is connected directly to a high pressure hydraulic accumulator and is connected to the at least one wheel brake cylinder through a brake pressure increase valve, a brake pressure decrease valve that is connected subsequent to the wheel brake cylinder, the vehicle brake system has a fluid tight low pressure hydraulic accumulator being closed in relation to atmosphere and connected to an intake side of the hydraulic pump and connected to the wheel brake cylinder through the brake pressure decrease valve.

Another , Publication European Application No.EP 0478952 A1, presents Electro-pneumatic trailer brake system with electronic braking pressure control, and with a pneumatic retention circuit, and with one of the, or the brake cylinders adjunctive pressure control valve and with pressure sensors and an electronic control device and with an anti-lock device, of the or the pressure control valves of the respective electronic brake pressure control or derived from pneumatic retaining circuit pressure is selected, and each pressure control valve in case of failure of the electrical brake signal is changeable from carriages via the pneumatic retaining circuit for braking purposes, characterized in that the trailer brake valve is a pressure sensor, the in the work of the anti-lock device a spare target value for the electronic control unit when the actual electrical setpoint from the towing vehicle is not available here.

In moreover, the publication of Germany Patent Application No. DE10143888 A1 presents a combined valve means for the brake pressure and level control with a pressure fluid supply port, a first pressure modulation port for connection of a brake cylinder and a second pressure modulation port connecting an air spring bellows, wherein the flow path from the supply connection to the pressure modulation port, a common pressure inflow section which, with the first pressure modulation port and / or with the second pressure modulation port can be connected.

The publication of Germany Patent Application No. DE 19855217 A1 presents an air control valve, which is arranged between a brake master cylinder, and an air valve comprising: a first chamber which is connected to the brake valve; a second chamber which is connected to the main air cylinders; a third chamber which is connected to an exhaust passage; a retaining membrane for selectively making and breaking a connection between the first chamber and the second chamber; a waste membrane for selectively making and breaking a connection between the second chamber and the third chamber; one-way throttle valve for throttling one of the retaining diaphragm to the brake valve flowing air and for producing such an air pressure differential across the waste membrane is disposed in the first chamber that opens the waste membrane to the connection between the produce second chamber and the third chamber.

The publication of US Patent No. US 5456526 presents wheel lock prevention system for a vehicle including a front axle having right and left front wheels, a first rear axle having right and left driving wheels, and a second rear axle having right and left follower wheels, the system comprising: means for generating brake force; a first brake control device for controlling the brake force applied to said right and left front wheels; a second brake control device for controlling the brake force applied to said right driving wheel; a third brake control device for controlling the brake force applied to said left driving wheel; first and second detecting means for detecting the rotational speeds of said right and left front wheels, respectively; third and fourth detecting means for detecting the rotational speeds of said right and left driving wheels, respectively; a proportioning device including means for receiving brake pressure from the first brake control device and means for applying a corresponding brake pressure to the follower wheels, the corresponding brake pressure being less than a threshold pressure value, said proportioning device further including means for determining the threshold pressure value corresponding to a live load of the vehicle; and a controller for inputting signals from each of said detecting means and outputting respective control signals to corresponding brake control devices.

It is known from European Patent Specification No.EP 2067675 A brake control circuit for trailer brakes in a by-wire brake system, comprising a fluid pressure source and a fluid reservoir characterized in comprising a pair of electro-hydraulic proportional valves, for controlling communication between the source, the reservoir and the trailer brakes, and further with a pair of electro-hydraulic shutoff valves, each controlling communication between the trailer brakes and a corresponding one of the proportional valves.

Brake systems known at the automotive market for large semi-trailers and trailers are mostly based on pneumatic subassemblies, that control the operation of drum mechanical brakes or their pneumatic brake system activates pneumatic-membrane cylinders of two-sided operation that control the operation of hydraulic brakes.
The pneumatic brake systems comprise amongst other things of the Electric Brake System (EBS) controls, that depending on the air pressure variation in the vehicle brake system, control the operation of modern pneumatic as well as pneumatic and hydraulic brakes in semi-trailers and trailers. Usually, the EBS controls are linked via two lines of control signals i.e. pneumatic and electric. The pneumatic line controls the pneumatic brakes, and the electronic system of the EBS controls additionally considers current weight of the trailer (signal from the air bag suspension system) and data from the EBS system sensors. Based on the analysis of signals sent through these sensors that are installed in the brake mechanisms disks of individual wheel of towed vehicle, EBS control controls the operation of the brakes on the right or left side adequately. Signals from the electric control line are used exclusively for the control of connection correctness between the truck and towed vehicle. In case of electric signal decay in the electric line, e.g. due to disconnection of the vehicles, the electronic system of EBS control activates the emergency brake system of the trailer.
In case of EBS controls known on the market, e.g. of WABCO make, when using the electric control line signals, it is not possible to control the operation of EBS control, thus operation of the pneumatic brakes in a manner that corresponds to the operation of brake systems in tractor or truck.
Known designs of simplified brake systems in smaller trailers are based on either dangerous brakes of inertial type (overrunning) or in case of average size semi-trailers or trailers, pneumatic systems of analogical operation to larger sets of road vehicles.
In case of a vehicle towing a trailer with overrunning brakes, except the ball coupling and conductor controlling the trailer lights, there are no other elements of brake system installed, what would be a significant advantage of such solution, but poor effectiveness of brakes operation causes that these trailers endanger safety and life of the driver and of other drivers.

The trailer or trailer with pneumatic brakes necessitates installation in the vehicle of relatively large elements of the pneumatic brake system such as compressor, air tank, pneumatic hoses, valves, etc. Air compressor of this brake system operates in practically continuous mode, hence it also continuously draws engine energy necessary for its operation. The remaining elements of the pneumatic brake system take up a lot of space in the vehicle, especially a-few-dozen-litre compressed air tanks.
The system according to invention is deprived of difficulties related to installation of the compressed air tanks, compressors, etc. and enables using the electric control line only, to control the pneumatic and hydraulic executive assembly and operation of the hydraulic brakes.

According to the invention, the tractor-trailer braking system comprises
on the tractor:
   a hydraulic brake pump activated by the depression of a brake pedal, pressure transmitters responsive to the hydraulic brake pressure of the hydraulic brake pump, and
   a comparator receiving via electric wires signals from the pressure transmitters;
on the trailer:
   an air tank,
   two compressors for pressurizing the air tank,
   an electric-pneumatic proportional control valve, having an inlet connected by means of a pneumatic hose to the air tank and an outlet, receiving an electric signal from the comparator via an electric wire,
an EBS-control having
   a first inlet connected to the outlet of the electric-pneumatic proportional control valve by means of a pneumatic hose,
   a second and a third inlet each connected to an ABS sensor by means of electric wire,
   two first pneumatic outlets, and
   a second pneumatic outlet,
two air-hydraulic actuators, each having an inlet connected to one of the first pneumatic outlets of the EBS-control by means of a pneumatic hose and having an outlet connected with hydraulic brakes of the trailer or semi-trailer via hydraulic hoses, and
an air bag suspension system connected via a pneumatic hose to the second pneumatic outlet of the EBS-control.

In the system each of the pressure transmitters is preferably installed from below on the T-connector, that is mounted on the towing vehicle hydraulic brake pump, at the top part the T-connector comprises the air-bleeding valve, and at the side wall the T-connector comprises the union bolt socket for one of two circuits of the hydraulic brake pump.

Moreover the system could advantageously comprise two compressors connected by means of separate pneumatic hose with one-way valves and then with the air tank, and each of the compressors is preferably connected via the cooling hose and an one way valve to the air tank.

According to a preferred embodiment of the invention, wherein the hydraulic pressure transmitters are connected via electric wires with the voltage or current signals comparator that analyzes both signals and sends one selected signal, when both signals are of the same value or in case the signals differ, it sends the signal of higher value of voltage or current.
According to a another preferred embodiment of the invention is the cooling hose, specially formed of copper tube is directly connected to compressed air socket of the compressor, and the other end is connected to the air hose.
According to a another preferred embodiment of the invention is that electric-pneumatic proportional valve is connected via short pneumatic hose should be characterized by the smallest length with EBS control, alike the remaining elements: air compressors, valves, air tank, air-hydraulic actuators.

Structure of system according to the invention has very compact construction and the reaction time of the system is shorter by half and amounts about 0.3 s comparing to the admissible reaction time that do not exceed 0.6 s. Very compact design causes that time of transferring the electric signal as well as corresponding changes of pressure in the electric-pneumatic proportional valve are sent much quicker to EBS control, pneumatic and hydraulic transmitters and to hydraulic brakes of the trailer.
Advantageously, installation of two independently operating air compressors influence significantly the reduction of time needed to fill the air tank with air and in case of fault of one of the compressors, provides continuous operation of the brake system, without the need to immediately repair and replace the defective compressor. Similarly, the installation of a voltage or current signals comparator provides either in case of fault of one of the hydraulic circuits of the vehicles hydraulic system or fault of the pressure transmitter, the control of the electric signal of the electric-pneumatic proportional valve and correct functioning of the whole brake system.
The system enables major improvement of safety related to utilization of transportation sets within the sector of light and average trailers and reduces the risk of accidents caused by poor effectiveness of overrunning inertial brakes, especially during driving under severe weather conditions on slippery and icy road. New brake system should also influence the improvement of agricultural transportation safety, especially related to forest transportation, because it is frequent case that forest trailers of maximum authorized total mass up to 10-12 t are not equipped with any kind of brakes.

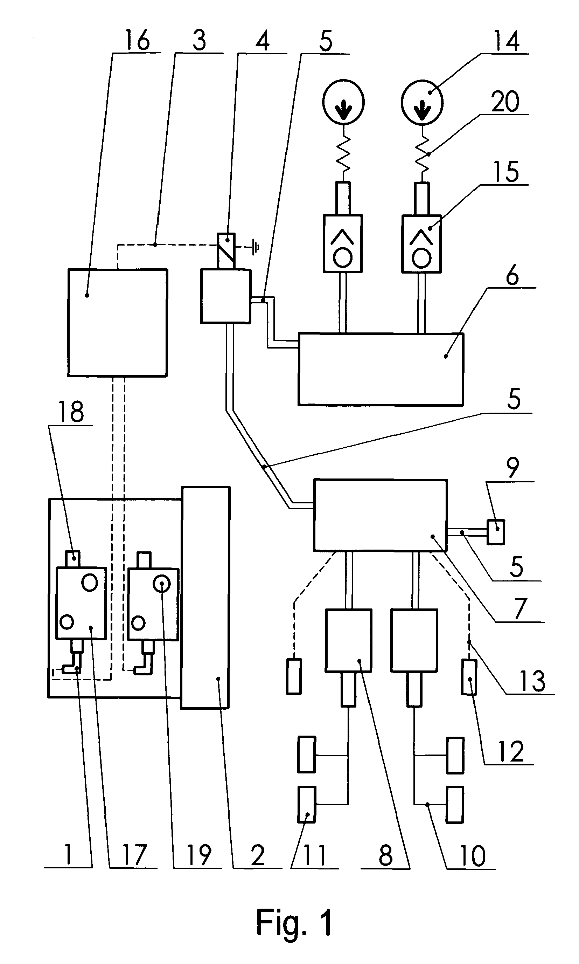

The subject of the invention is presented in the embodiment on the drawing, where the Fig. 1 shows block diagram of full version of the system with two pressure transmitters and voltage or current signals comparator as well as compressors with additional cooling segments. In the diagram, air hoses are identified with double line, electric wires with broken line and hydraulic hoses with full line.

The system consists of pressure transmitters 1 installed in the circuits of towing vehicle the hydraulic brake pump 2, the electric wire 3 connecting the electric-pneumatic proportional valve 4 connected by means of the pneumatic hoses 5 with the air tank 6 and the EBS control 7. The EBS control 7 is connected via the pneumatic hoses 5 with the air-hydraulic actuator 8 and convertor of the suspension system 9 of the trailer. The air-hydraulic actuators 8 are connected with the hydraulic brakes 11 of the trailer via the hydraulic hoses 10. The wheel disks are equipped with the ABS sensors 12 that are connected with the EBS control 7 via the ABS the wire 13. Two, electrically supplied compressors 14, via the pneumatic hoses are connected to the one-way valves 15 and further to the air tank 6. In the full executive option, the electric-pneumatic system consists of two pressure transmitters 1 that are installed on the T-connectors 17 screwed directly to the body of the towing vehicle the hydraulic brake pump 2. Connectors 17 in their top part, are equipped with the air-bleeding valves 18 and with union bolt the sockets 19 on the side wall to connect the brake circuits of the towing vehicle. The pressure transmitters 1 are connected via the electric wires 3 with the voltage or the current signals the comparator 16 which is connected with the electric-pneumatic proportional valve 4 by means of the electric wire 3. Moreover, cooling hoses 20 are installed in the compressed air circuits of the compressors 14.

In order to unequivocally present the nature of the invention, the block diagrams do not include connections of fuses, relays, system operation status indicators, control sockets, computer sockets, valves, etc.

The system according to the invention, consists of a part of the system installed in the towing vehicle and section installed in the trailer. In the towing vehicle the hydraulic brake pump 2 is equipped with two pressure transmitters 1, the voltage or the current signals the comparator 16 next to them and the electric circuit 3 connecting the comparator 16 with the connection socket of the trailer.

The trailer is equipped with: the electric wire 3 connected with a the plug and the electric-pneumatic proportional valve 4 and other elements: two compressors 14, one-way valves 15, the air tank 6, the EBS control 7, the air-hydraulic actuators 8.
Method of operation of the system is as follows: the driver depresses brake pedal that activates the hydraulic brake pump 2. The hydraulic (brake) fluid pressure increases in the brake pump 2, it is compressed and acts on the elements inserted in both brake circuits of the towing vehicle, including the pressure transmitters 1 preferably installed from below (easiness of venting) on special T-connectors 17. The pressure transmitters 1, proportionally to the hydraulic pressure changes of the brake pump 2, change instantaneous pressures into the electric signals, the voltage or the current 4 - 20 mA, and send them to the comparator 16. The comparator 16 compares both signals and if they are identical - selects one of them and sends to the electric pneumatic proportional valve 4, or if they differ, it sends the one of higher value. The comparator 16 selects the higher control signal - what is an important and beneficial feature of the solution, because it secures correct operation of the system part that is installed in the trailer, e.g. in case of fault of one of the towing vehicle the hydraulic brake system circuits or in case of damage of one of the pressure transmitters 1 that are installed on the vehicle brake pump 2.

The selection of signals in the comparator 16, is of important meaning for the correct operation of the system in case of controlling the current signal of the electric-pneumatic proportional valve 4.

In the electric-pneumatic proportional valve 4, the electric signal is converted to proportional value of air pressure, variations of which control the operation of the EBS control 7 and air-hydraulic actuators 8 and hydraulic brakes 11.
Advantage of the solution according to the invention consists in innovatively configured electronic, pneumatic and hydraulic subassemblies available at the market and their combination. Because of that, in the towing vehicle the reliable electric control of the electric-pneumatic proportional valve 4 operation is enabled, thus the EBS control 7, the air-hydraulic actuators 8 and hydraulic brakes 11 of light and average size trailers of maximum authorised mass up to 10 t. Application of the cooling hoses 20 in the circuits of the compressors 14, protects the pneumatic hoses against overheating and depressurization, similarly, independent connection of the compressors with the air tank using one-way valves significantly influences the reliability improvement and operation safety level of the whole brake system. Moreover, application of short pneumatic hoses, that connect all pneumatic elements enables obtaining not only compact design of the system installed in the trailer but also much shorter response times of the system - from depressing the brake pedal by the driver until obtaining proper hydraulic pressure in the brakes.
Comparing to overrunning inertial systems, the new control system represents much better, effective and safe solution; and in relation to pneumatic systems, it is characterized by significant savings of energy necessary to drive the compressors.

## Claims

1. A tractor-trailer braking system comprising:
on the tractor:
a hydraulic brake pump (2) activated by the depression of a brake pedal, pressure transmitters (1) responsive to the hydraulic brake pressure of the hydraulic brake pump (2), and
a comparator (16) receiving via electric wires signals from the pressure transmitters (1);
on the trailer:
an air tank (6),
two compressors (14) for pressurizing the air tank (6),
an electric-pneumatic proportional control valve (4),
having an inlet connected by means of a pneumatic hose (5) to the air tank (6) and an outlet,
receiving an electric signal from the comparator (16) via an electric wire (3),
an EBS-control (7) having
a first inlet connected to the outlet of the electric-pneumatic proportional control valve (4) by means of
a pneumatic hose (5),
a second and a third inlet each connected to an ABS sensor (12) by means of electric wire (13),
two first pneumatic outlets, and
a second pneumatic outlet,
two air-hydraulic actuators (8), each having an inlet connected to one of the first pneumatic outlets of the EBS-control (7) by means of a pneumatic hose and having an outlet connected with hydraulic brakes (11) of the trailer or semi-trailer via hydraulic hoses (10), and
an air bag suspension system (9) connected via a pneumatic hose to the second pneumatic outlet of the EBS-control (7).

2. The tractor-trailer braking system according to claim 1, **characterized in that** each of the pressure transmitters (1) is installed from below on the T-connector (17), that is mounted on the towing vehicle hydraulic brake pump (2), at the top part the T-connector (17) comprises the air-bleeding valve (18), and at the side wall the T-connector (17) comprises the union bolt socket (19) for one of two circuits of the hydraulic brake pump (2).

3. The tractor-trailer braking system according to claim 1, **characterized in that** it comprise two compressors (14) connected by means of separate the pneumatic hose (5) with one-way valves (15) and then with the air tank (6), and each of the compressors (14) is preferably connected via a cooling hose (20) and an one-way valve (15) to the air tank (6).

## Patentansprüche

1. Bremssystem für den Anhänger eines Traktors haltend
beim Traktor:
eine hydraulische Bremspumpe (2) aktivierbar durch das Drücken des Bremspedals, auf den Druck der hydraulischen Bremskraft der hydraulischen Bremspumpe (2) reagierende Druckmittler (1) und einen Komparator (16), der mittels elektrischer Leitungen Signale vom Druckmittler (1) empfängt;
beim Anhänger:
einen Luftbehälter (6),
zwei Kompressoren (14) um den Luftbehälter (6) unter Druck zu stellen,
ein elektro-pneumatisches proportionales Kontrollventil (4),
beinhaltend einen Eintritt der mittels eines Luftschlauchs (5) an den Luftbehälter (6) angeschlossen ist, und einen Austritt,
der ein elektrisches Signal vom Komparator (16) über ein eine elektrische Leitung (3) empfängt,
eine EBS-Steuerung (7) beinhaltend
einen ersten Eintritt, der mit dem Austritt des elektropneumatischen proportionalen Kontrollventils (4) mittels eines Luftschlauchs (5) verbunden ist,
einen zweiten und dritten Eintritt, die mit einem ABS-Sensor (12) mittels einer elektrischen Leitung (13) verbunden sind,
einen zweiten pneumatischen Austritt,
zwei pneumatisch-hydraulische Aktuatoren (8), die jeweils einen mit einem der ersten pneumatischen Austritte der EBS-Steuerung (7) mittels eines Luftschlauchs verbundenen Eintritt, und jeweils einen mit den hydraulischen Bremsen (11) am Anhänger oder Halbanhänger mittels hydraulischer Schläuche (10) verbundenen Austritt haben,
eine Luftkissen-Aufhängung (9), die mittels eines Luftschlauchs mit dem zweiten Austritt der EBS-Steuerung (7) verbunden ist.

2. Bremssystem für den Anhänger eines Traktors nach Anspruch 1, **gekennzeichnet dadurch, dass** jeder der Druckmittler (1) von unten am T-Stück (17) installiert ist, das an der hydraulischen Bremspumpe (2) des Schleppfahrzeugs befestigt ist, und dass am Oberteil das T-Stück (17) ein Entlüftungsventil (18), und an der Seitenwandung das T-Stück (17) eine Hohlschraubenaufnahme (19) für einen der zwei Kreisläufe der Hydraulikpumpe (2) beinhaltet.

3. Bremssystem für einen Traktoranhänger nach Anspruch 1, **gekennzeichnet dadurch, dass** es zwei mittels getrennter Luftschläuche (5) mit ein Einwegventilen (15) und anschließend mit dem Luftbehälter (6) verbundene Kompressoren (14) beinhaltet, und jeder der Kompressoren (14) vorzugsweise mittels eines Kühlschlauchs (20) und einem Einwegventil (15) mit dem Luftbehälter (6) verbunden ist.

## Revendications

1. Système de freinage tracteur-remorque comprend
sur le tracteur :
une pompe de freinage hydraulique (2) activée par l'enfoncement d'une pédale de frein, transmetteurs de pression (1) réagissant à la pression de freinage hydraulique de la pompe de freinage hydraulique (2) et un comparateur (16) recevant, par des fils électriques, des signaux provenant des transmetteurs de pression (1) ;
sur la remorque :
un réservoir d'air (6),
deux compresseurs (14) pour mettre sous pression le réservoir d'air (6),
une vanne de commande proportionnelle électro-pneumatique (4),
ayant une entrée reliée au moyen d'un tuyau pneumatique (5) au réservoir d'air (6) et une sortie,
recevant un signal électrique provenant du comparateur (16) par un fil électrique (3),
une unité de commande d'EBS (7) ayant
une première entrée reliée à la sortie de la vanne de commande proportionnelle électro-pneumatique (4) au moyen de :
un tuyau pneumatique (5),
une deuxième et une troisième entrée connectées chacune à un capteur ABS (12) au moyen d'un fil électrique (13),
une seconde sortie pneumatique,
deux actionneurs hydro-pneumatiques (8), chacun ayant une entrée reliée à l'une des premières sorties pneumatiques de l'unité de commande d'EBS (7) au moyen d'un tuyau pneumatique et ayant une sortie connectée aux freins hydrauliques (11) de la remorque ou semi-remorque par tuyaux hydrauliques (10), et
un système de suspension de coussin gonflable (9) relié, par un tuyau pneumatique, à la deuxième sortie pneumatique de l'unité de commande d'EBS (7).

2. Système de freinage tracteur-remorque selon la revendication 1, **caractérisé en ce que** chacun des transmetteurs de pression (1) est installé de dessous sur le connecteur en T (17) qui est monté sur la pompe de freinage hydraulique de véhicule remorqueur (2), à la partie supérieure le connecteur en T (17) comprend une vanne de prélèvement d'air (18), et à la paroi latérale le connecteur en T (17) comprend la prise de boulon de raccordement (19) pour l'un des deux circuits de la pompe hydraulique (2).

3. Système de freinage tracteur-remorque selon la revendication 1, **caractérisé en ce qu'**il comprend deux compresseurs (14) reliés au moyen d'un tuyau pneumatique indépendant (5) avec des vannes unidirectionnelles (15) et ensuite avec le réservoir d'air (6), et chacun des compresseurs (14) est de préférence relié par un tuyau de refroidissement (20) et une vanne unidirectionnelle (15) au réservoir d'air (6).
